# EUROPEAN PATENT SPECIFICATION

(11) **EP 3 899 257 B1**
(45) Date of publication and mention of the grant of the patent: **08.02.2023**
(21) Application number: 19835367.4
(22) Date of filing: 17.12.2019
(51) Int. Cl.: F04B 23/00, F04D 13/06, F04D 13/08, F03D 9/28

(54) **LONG-DISTANCE TRANSMISSION OF POWER UNDERWATER**
FERNÜBERTRAGUNG VON ENERGIE UNTER WASSER
TRANSPORT D'ENERGIE À LONGUE DISTANCE SOUS-MARIN

(30) Priority: 18.12.2018 GB 201820600
(43) Date of publication of application: 27.10.2021
(73) Proprietor: Subsea 7 Norway AS, 4033 Stavanger (NO)
(72) Inventor: KLOSTER, Ernst Kristen Helgøy, 4023 Stavanger (NO)
(74) Representative: Cummings, Sean Patrick
(86) International application number: PCT/EP2019/085745
(87) International publication number: WO 2020/127339

(56) References cited:
- WO-A2-2012/123700
- US-A1- 2010 158 705
- US-A1- 2010 276 935
- US-A1- 2013 028 729

## Description

This invention relates to the challenges of transferring or transmitting power over a long distance underwater.

The invention may, for example, be applied to the supply of power from an onshore electric power source to an electric power consumer far offshore, such as a subsea installation for the production of oil and gas. Conversely, the invention may also be applied to conveying power from a source of electric power far offshore, such as an installation for generating renewable energy, to an onshore electric power grid.

The invention may also be used to transfer power between offshore locations that are far distant from each other. An example is from an offshore platform to a remote subsea processing unit that receives power from the platform to process hydrocarbons that then flow back to the platform.

There is an increasing need to use, to generate and to transmit electrical energy offshore and in particular at subsea locations. That need has been driven by the growth in offshore renewable energy generation and by an increasing requirement for high-power electrically-driven subsea equipment, particularly in the subsea oil and gas industry. An example of such equipment is a hydraulic power unit or HPU that is required to actuate remotely-operable hydraulically-driven valves or pumps installed on the seabed.

Previously, subsea valves or pumps have usually been used near offshore oil and gas production platforms that provide a conveniently close source of power. However, with the trend to exploit marginal subsea oil and gas fields, including remote or inaccessible fields, there is a need to minimise the cost of producing hydrocarbons from such fields. One approach to this is to transfer at least some conventionally-topside production and storage functions to a subsea location, hence displacing at least some hydrocarbon processing steps from topside to the seabed.

Moving processing steps from topside to a subsea location involves placing electrically-powered equipment not just underwater but also close to wherever the subsea well may be. As a subsea well could be many kilometres away from a convenient source of electric power such as a platform or a populated coastline, it follows that there is a need to supply electric power at high voltage and/or high current over an inconveniently long distance underwater.

Various proposals have been made for long-distance transfer of electric power. For example, WO 2013/077744 discloses high-voltage direct current (HVDC) transmission underwater. However, electrical cables that are suitable for underwater use are extremely expensive. Such cables also need to be manufactured in a single length, which involves an increasing risk of detrimental defects arising over long distances. WO 2017/044268 describes launching a guided surface wave across a sea/air interface in order to transfer power from an offshore location. Power losses limit the maximum transmission distance that is achievable by that method.

GB2550325A describes a further example of a subsea power-transmission system.

Against this background, the present invention relates to a subsea long-distance power-transmission system according to claim 1. The pumping station and/or the generating station may be separated by a distance of 100km or more

The system may further comprise a remote electric power source that is connected to the pumping station by a cable. For example, the electric power source may be at an above-surface location.

The system may be arranged as a closed loop, in which case the system further comprises a return duct extending across the seabed between the generating station and the pumping station. The return duct is arranged to convey the flow of working fluid from the generating station to the pumping station for re-pressurisation. In a closed-loop system, the working fluid could, for example, be fresh water or monoethylene glycol (MEG).

Alternatively, the system may be arranged as an open loop. In that case, the working fluid is seawater, the pumping station comprises a seawater inlet in fluid communication with one end of the supply duct and the generating station comprises a seawater outlet in fluid communication with an opposite end of the supply duct.

In both closed-loop and open-loop configurations, the system may further comprise a production flowline that extends along the supply duct and that is in fluid communication with a subsea source of hydrocarbon production fluid. Conveniently, the production flowline may be disposed within and extend along the interior of the supply duct. A heater may act on the working fluid in the supply duct. The production fluid suitably flows in the production flowline in contra-flow to the working fluid flowing in the supply duct.

The supply duct may comprise a penstock that has an accelerator portion tapering toward the generating station.

The generating station may, for example, comprise at least one turbo-generator assembly that has: a hollow housing arranged to maintain a gas-filled space within the housing; at least one working fluid inlet extending through the housing to effect fluid communication between the supply duct and the gas-filled space; and a Pelton turbine supported within the housing to turn in the gas-filled space in reaction to the flow of the working fluid entering the gas-filled space via the or each working fluid inlet.

The generator may conveniently be supported by the housing of the turbo-generator assembly. The housing may further comprise a chamber for receiving the working fluid after the working fluid has impinged on the turbine. The housing may be penetrated by at least one working fluid outlet that is in fluid communication with the pumping station or with the surrounding seawater.

The inventive concept embraces a corresponding method of transmitting power over a long distance underwater according to claim 17.

The method may comprise returning the flow of working fluid across the seabed from the machine to the pumping station, re-pressurising the flow and recirculating the flow back across the seabed to the machine in a closed loop. Alternatively, the method may comprise drawing seawater into the pumping station from the surrounding sea to constitute the flow of working fluid and expelling the seawater into the surrounding sea after using the seawater to power the machine.

A flow of hydrocarbon production fluid may be conveyed parallel to the flow of working fluid between the pumping station and the machine. For example, the flow of production fluid may be surrounded with the flow of working fluid. Where the flow of working fluid is heated, it is advantageous for the flow of production fluid to be opposed in direction to the flow of working fluid.

The invention adopts an alternative approach to power transmission that removes the need for a long subsea electrical cable and for isolation or connection of associated electrical systems. The invention relies instead on the pressure and flow of a working fluid, which may be water or another liquid.

Embodiments of the invention provide a system for transferring electric power over a long distance. The system comprises: an electrically-powered pump; at least one conduit for transporting a fluid pressurised by the pump; and at least one turbine assembly at the other end of the at least one conduit; wherein the turbine of the turbine assembly is rotated by the pressurised fluid and thereby produces electricity. The length of the conduit may, for example, be more than 100 km. This and other components of the system are preferably located substantially entirely underwater. For example, the electrically-powered pump may be located on the seabed although its power supply could come from above the surface.

In some embodiments, the fluid system is a closed-loop system comprising a higher-pressure supply fluid path from the pump to the turbine and a lower-pressure return fluid path from the turbine to the pump. For example, the conduit may comprise a pipe-in-pipe pipeline, wherein an inner pipe contains pressurised fluid flowing to the turbine and an annulus or other space around the inner pipe contains return fluid flowing back to the pump, or vice-versa.

In a closed-loop system, the fluid is preferably fresh water or water treated with additives to combat corrosion and microbial growth. However, the fluid could be another liquid such as MEG.

In other embodiments, the fluid system is an open-loop system in which the electrically-powered pump draws in and pressurises seawater above the prevailing hydrostatic pressure and the turbine rejects the seawater back into the sea. In that case, the conduit may be a single water pipeline, preferably with an inner diameter that is greater than 20 feet (6.1 metres).

A conduit for use in the invention may, for example, be a pipeline of thermoplastic composite pipe, steel pipe, polymer-lined pipe or any combination of such pipes. The conduit may contain at least one flowline for transporting a hydrocarbon production fluid. The conduit may contain at least one heating element such as an electrical heating cable.

Thus, the invention provides an alternative to long-distance subsea power cables, using pipes or pipe-in-pipe structures to transport high pressure water out to an offshore location and there to generate power remotely using a subsea turbine. Return water may, optionally, be pumped back by suction of a nearshore pump.

Advantageously, the invention avoids having to convert from HVAC to HVDC and back to HVAC for subsea transport of power over long distances. Normally such a solution would require topside facilities.

In summary, a subsea long-distance power-transmission system of the invention comprises an electrically-driven pumping station for producing a flow of pressurised working fluid and an electricity generating station that has an electrical generator coupled to a fluid-powered machine. A supply duct extends across the seabed between the pumping station and the generating station, that duct being arranged to convey the flow of working fluid from the pumping station to power the machine. Electric power is supplied to the pumping station from an electric power source, such as a national power grid, and is supplied from the generator to an electric power consumer far distant from the power source, such as a subsea oil and gas installation.

In order that the invention may be more readily understood, reference will now be made, by way of example, to the accompanying drawings in which:
Figure 1 is a schematic side view of a first power-transmitting system of the invention;
Figure 2 is a schematic side view of a second power-transmitting system of the invention;
Figure 3 is a schematic sectional side view of a power transmitting link for use in the arrangements of Figures 1 and 2;
Figure 4 is a schematic sectional side view of a variant of the power transmitting link shown in Figure 3;
Figure 5 is a schematic sectional side view of a further variant of the power transmitting link shown in Figure 4;
Figure 6 is a cross-sectional view through a conduit of the power transmitting link on line VI-VI of Figure 5; and
Figure 7 is a cross-sectional view of a variant of the conduit shown in Figure 6.

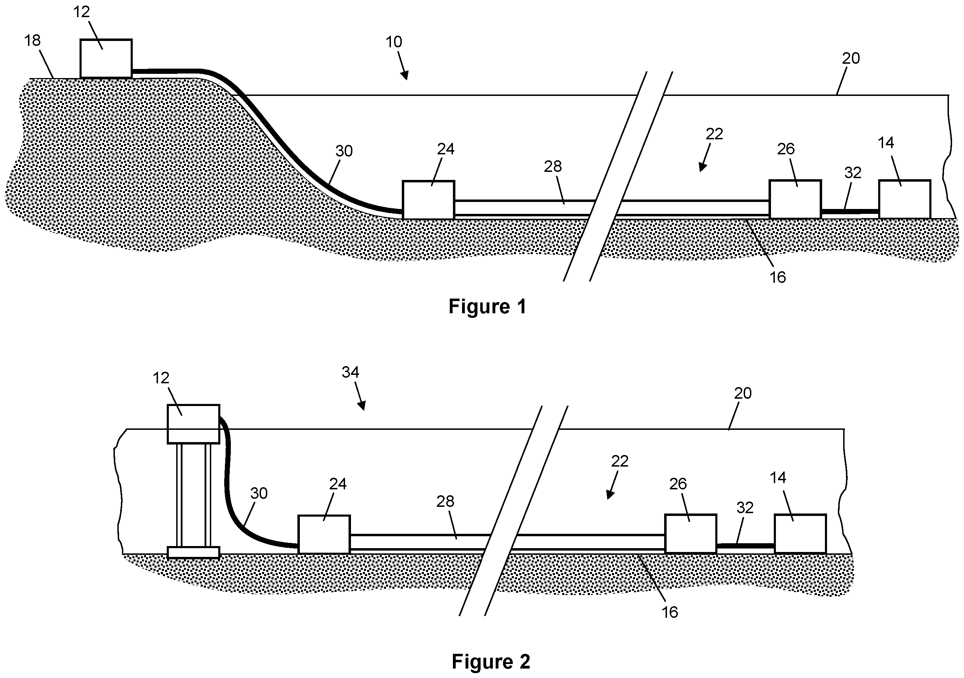

Referring firstly to Figure 1 of the drawings, a first power transmitting system 10 of the invention transmits power from a source of electric power 12 to a consumer of electric power that may be exemplified by a subsea oil and gas installation 14 on the seabed 16. The source 12 may be a generating station or a node of a power grid.

In this example, the source 12 is on land 18 but it could instead be beneath the surface 20, for example as part of an offshore renewable energy installation. Conversely the consumer of electric power could instead be above the surface 20, for example a community on an island that is separated from the mainland by an expanse of sea.

The subsea installation 14 is far distant from the source 12, in the order of several tens of kilometres away and potentially substantially more than 100km away, for example 150km to 300km away.

In accordance with the invention, the power transmitting arrangement 10 comprises a subsea power transmitting link 22 that, in this example, lies on the seabed 16. The link 22 conveys power along most, and potentially nearly all, of the distance between the source 12 and the subsea installation 14. At one end, close to the source 12, the link 22 converts electrical energy from the source 12 into kinetic energy and potential energy by creating a flow of working fluid at elevated working pressure. The fluid flows along the link to drive a machine at the other end of the link, close to the subsea installation. The machine drives a generator to convert the energy conveyed by the fluid back into electrical energy to power the subsea installation 14.

Thus, at its end closest to the source 12, the link 22 comprises an electrically-driven pumping station 24. Conversely, at its end closest to the subsea installation 14, the link 22 comprises a generating station 26 that in this example comprises a turbo-generator assembly. At least one fluid conduit 28 extends across the seabed 16 between the pumping station 24 and the generating station 26.

The pumping station 24 may comprise one or more pumps of any suitable type, such as a positive-displacement pump, a centrifugal pump or any combination of two or more pumps.

The or each pump of the pumping station 24 is driven by an integral electric motor that is powered via a conventional electric power cable 30 extending from the source 12 to the pumping station 24. To reduce its cost and to maximise its reliability, the cable 30 should be as short as possible and hence only as long as is necessary to connect the pumping station 24 on the seabed 16 to the source 12 on land 18. As a non-limiting example, the cable 30 may be from 5km to 15km long.

A second, much shorter connector 32 connects the generating station 26 to a power distribution system of the subsea installation 14.

Figure 2 of the drawings shows a second power transmitting system 34 of the invention. This largely corresponds to the first power transmitting system 10 shown in Figure 1 and therefore like numerals are used for like features. The key difference between these variants is that Figure 2 depicts the source 12 as an offshore or inshore platform that has an on-board generating station for producing electric power. The umbilical cable 30 that connects that source 12 to the pumping station 24 can be beneficially shorter than the cable 30 shown in Figure 1, potentially being not much greater in length than the depth of the water between the surface 20 and the seabed 16 at that location.

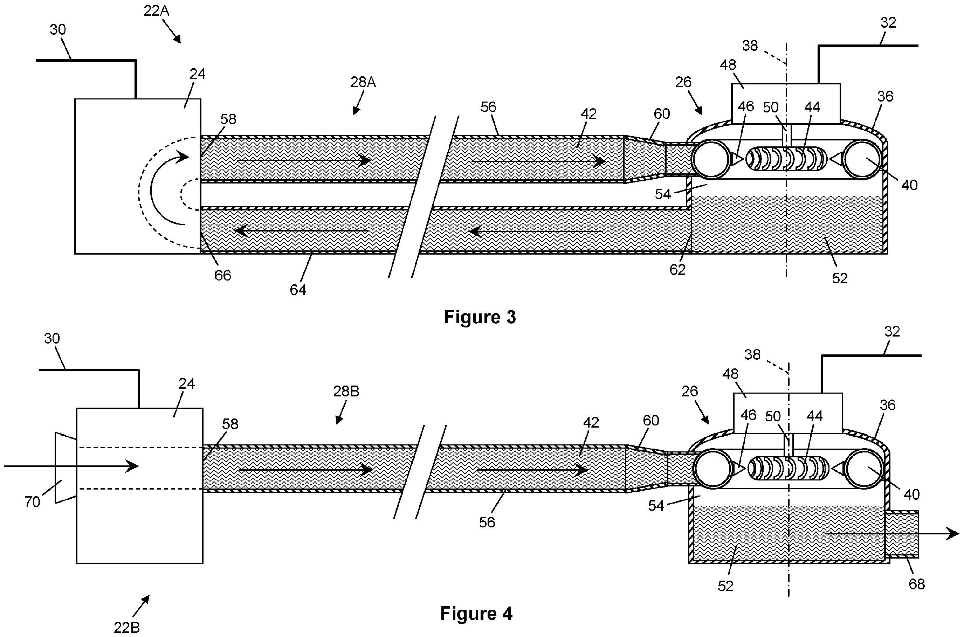

Moving on now to Figures 3, 4 and 5, these drawings show variants of the link 22 that are denoted as 22A, 22B and 22C respectively. Specifically, Figures 3, 4 and 5 show further details of the generating station 26 and variants of the fluid conduit 28 that extends between the pumping station 24 and the generating station 26. The generating station 26 is largely common to all of these embodiments and so will be described first. The variants of the fluid conduit 28 shown in Figures 3, 4 and 5, denoted 28A, 28B and 28C respectively, will be described afterwards.

The turbo-generator assembly of the generating station 26 comprises a hollow, rigid, pressure-resistant and self-supporting domed shell or housing 36. The housing 36 is rotationally symmetrical around a substantially vertical central axis 38 and so is circular in plan view.

The housing 36 contains a generally toroidal manifold or ring duct 40 for receiving high-pressure working fluid 42 from the fluid conduit 28. The ring duct 40 encircles the central axis 38. The housing 36 also encloses, and the ring duct 40 also surrounds, a Pelton turbine 44 that is supported to spin about the central axis 38. Such a turbine 44 is characterised by an array of circumferentially-facing buckets that are distributed angularly around the central axis 38.

The ring duct 40 supports, and is in fluid communication with, an array of nozzles 46 that face inwardly from the ring duct 40 and are spaced angularly from each other around the central axis 38. The nozzles 46 are offset angularly from radial alignment with respect to the central axis 38, all in the same circumferential direction. Thus, the nozzles 46 have tangential orientation to direct jets of high-pressure fluid from the ring duct 40 into the buckets of the turbine 44 with substantial circumferential or tangential momentum. The buckets reverse the flow of the jets to maximise the momentum change and hence the reaction force applied to the turbine 44.

The housing 36 is surmounted by, and supports the weight of, a generator 48 such as an alternator. The generator 48 closes an open top of the housing 36 and is coupled to the turbine 44 by a drive shaft 50 that also spins on the central axis 38.

A transformer may conveniently also be mounted on top of the housing 36, for example on top of the generator 48, but has been omitted from these simplified views. For example, the transformer could instead be positioned elsewhere and connected to the generator 48 by cables or other conductors.

In the embodiments shown in Figures 3, 4 and 5, the working fluid 42 is a liquid such as water. Thus, the housing 36 extends downwardly below the turbine 44 to define an open-topped chamber 52 that serves as a drainage receptacle for a liquid working fluid 42 that falls from the turbine 44 under gravity after impinging on the buckets of the turbine 44. In this respect, a turbine of the Pelton type works most efficiently when it spins in a gas. Thus, advantageously, the surface of the liquid working fluid 42 in the chamber 52 is kept beneath the turbine 44 by a pocket 54 of air or other gas at elevated pressure that is trapped around the turbine 44 in the domed upper portion of the housing 36.

The ring duct 40 is in fluid communication with one or more supply ducts 56 of the fluid conduit 28, through which the ring duct 40 receives a flow of high-pressure working fluid 42 that is expelled, in use, from an outlet 58 of the pumping station 24.

In the examples shown in Figures 3, 4 and 5, the or each supply duct 56 has a tubular penstock 60 that enters the housing 36 of the generating station 26. The penstock 60 comprises a frusto-conical venturi or accelerator portion that tapers in a downstream direction to accelerate the flow of liquid that enters the ring duct 40.

On entering the ring duct 40, the incoming flow accelerated by the penstock 60 is deflected to follow the ring duct 40 in a circumferential direction corresponding to that of the jets projected by the nozzles 46. In consequence, a high-pressure, high-velocity flow of liquid impinges against the buckets of the turbine 44 and so drives the turbine 44 efficiently.

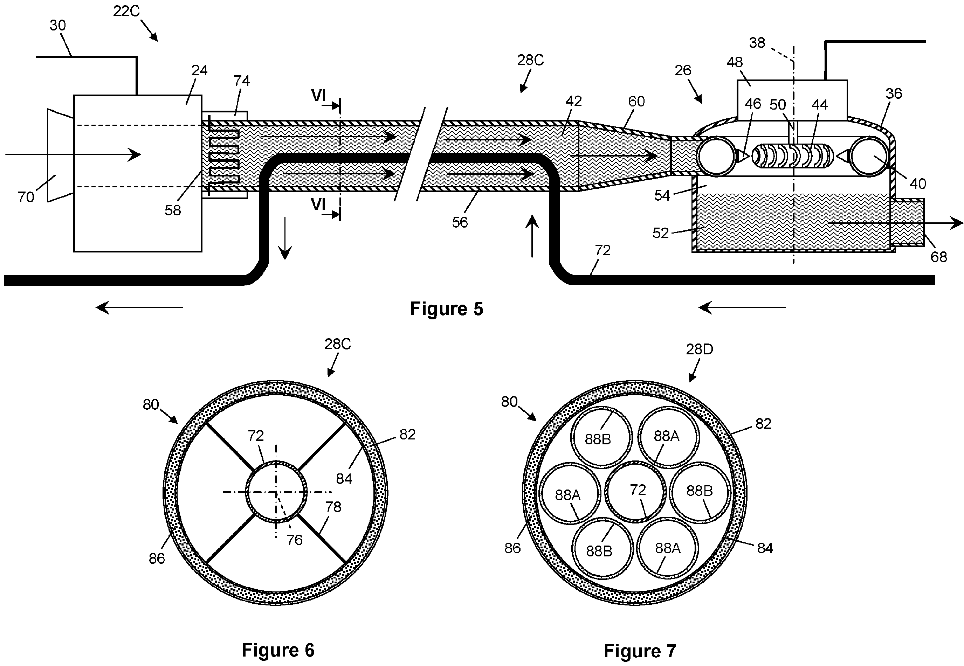

The link 22A of the embodiment shown in Figure 3 differs from the links 22B, 22C of the embodiments shown in Figures 4 and 5 in that Figure 3 shows a closed-loop system whereas Figures 4 and 5 show open-loop systems. Thus, the working fluid 42 in Figure 3 is recirculated in the system rather than being expelled into the sea and so could be fresh water treated with routine additives, or another liquid such as MEG. The housing 36 of the generating station 26 is therefore closed so as to enclose the working fluid 42 fully, apart from an outlet 62 in the housing 36 at the level of the chamber 52 through which the working fluid 42 is returned to the pumping station 24.

Specifically, the conduit 28A shown in Figure 3 comprises parallel supply and return ducts 56, 64 that together extend between the pumping station 24 and the generating station 26. As noted above, the supply duct 56 effects fluid communication between the outlet 58 of the pumping station 24 and the ring duct 40 of the generating station 26. Conversely, the return duct 64 effects fluid communication between the outlet 62 in the housing 36 of the generating station 26 and a suction inlet 66 of the pumping station 24. Working fluid 42 flowing along the return duct 64 that enters the suction inlet 66 of the pumping station 24 is re-pressurised by the pumping station 24 and recirculated through the outlet 58 into the supply duct 56, as shown in Figure 3.

Turning next to the links 22B, 22C shown in Figures 4 and 5, these open-loop systems have several features in common with the link 22A shown in Figure 3. Consequently, like numerals are used for like features. The main difference between Figures 4 and 5 and Figure 3 is that there is no longer a return duct 64, and hence there is no longer an outlet 62 in the housing 36 of the generating station 26. Instead, the housing 36 has an exhaust outlet 68 at the level of the chamber 52, through which a working fluid 42 in the form of seawater is expelled into the surrounding sea after passing through the turbine 44. The seawater working fluid 42 is drawn into the system through a suction inlet 70 of the pumping station 24 that now opens directly into the surrounding sea. The seawater working fluid 42 is pressurised by the pumping station 24 and then flows via the supply duct 56 from the outlet 58 of the pumping station 24 to the ring duct 40 of the generating station 26.

The link 22C shown in Figure 5 has all of the features of the link 22B of Figure 4, plus some additional features. Most notably, the supply duct 56, which is also shown in cross-section in Figure 6, is widened to accommodate a production flowline 72. A major portion of the production flowline 72 extends along the interior of the supply duct 56 in parallel to the direction of flow of the seawater working fluid 42. In this example, that portion of the production flowline 72 extends centrally along the supply duct 56. Thus, in this case, the supply duct 56 is an annulus that surrounds the production flowline 72, which is therefore submerged in the seawater working fluid 42 that flows within the supply duct 56.

As Figure 5 shows, the direction of flow of hydrocarbon production fluid along the production flowline 72 is typically opposed to the direction of flow of the seawater working fluid 42 along the supply duct 56. This contra-flow arises as the production fluid flows from the subsea installation 14 shown in Figures 1 and 2 back to the land 18 or to the platform that houses the source 12 of electric power.

Figure 5 also shows a heater 74 in the supply duct 56 upstream of the production flowline 72. The heater 74 heats the flow of seawater working fluid 42 exiting the pumping station 24 for the purpose of flow assurance in the production flowline 72. The added heat beneficially reduces the thermal gradient between the seawater working fluid 42 and the hotter production fluid in the production flowline 72. The abovementioned contra-flow between the production fluid and the working fluid 42 is also advantageous when using a heated working fluid 42. In that case, the temperature of the working fluid 42 will be at its highest at the upstream end of the supply duct 56 coinciding with the downstream end of the production flowline 72, where the production fluid will tend to have lost more of its heat.

The cross-sectional view of the conduit 28C in Figure 6 shows the production flowline 72 suspended on the central longitudinal axis 76 of the supply duct 56 by spacer elements 78 that extend radially outwardly from the production flowline 72 to the inner surface of the supply duct 56.

In this example, the supply duct is defined externally by a carrier pipe 80 that comprises a polymer sleeve or outer pipe 82, for example of PVC, a steel inner pipe 84 and a concrete layer 86 in an annulus between the outer and inner pipes 82, 84. The concrete layer 86 adds weight to stabilise the supply duct 56 on the seabed 16 and also contributes some thermal insulation to retain heat in the seawater working fluid 42 that flows within the supply duct 56.

By way of example, the outer pipe 82 may have an inner diameter of 60 inches (1.52m) the inner pipe 84 may have an inner diameter of 54 inches (1.37m) and the production flowline 72 may have an inner diameter of 16 inches (40.6cm).

Among variations within the inventive concept, a production flowline like that shown in the fluid conduit 28C of the open-loop system of Figures 5 and 6 could be integrated with the fluid conduit 28A of a closed-loop system like that shown in Figure 3.

In this respect, Figure 7 shows a fluid conduit 28D in which a bundle of parallel pipes is encased within an outer carrier pipe 80 like that shown in Figure 6, hence comprising a polymer outer pipe 82, a steel inner pipe 84 and a concrete layer 86 in the annulus between the outer and inner pipes 82, 84. Again, the production flowline 72 is disposed centrally in this example but it is now bundled with, and surrounded by, an array of pipes 88A, 88B for conveying working fluid 42 from the pumping station 24 to, and in an optional closed-loop system also back from, the generating station 26. The pipes 88A, 88B may be supported within the carrier pipe 72 by transverse spacers or may themselves serve as spacers that support the production flowline 72. The pipes 88A, 88B may be of a polymer material such as PVC; the production flowline 72 is typically of steel but could be of a polymer composite material.

In this example, the pipes 88A, 88B comprise an equal mixture of supply pipes 88A for receiving high-pressure working fluid 42 from the pumping station 24 and return pipes 88B for returning working fluid 42 back to the pumping station 24 at lower pressure after the working fluid 42 supplied by the pumping station 24 has passed through the turbine 44.

Many other variations are possible within the inventive concept. For example, any of the various pipes of a conduit or a production flowline could be of steel or largely of polymers or of composite materials. Additional layers or components can be added to the pipes, such as an internal liner or an outer coating. Such additional layers or components may comprise polymer, metal or composite materials. Also, pipes can be single-walled or of double-walled pipe-in-pipe (PiP) construction.

Other elongate elements such as auxiliary pipes and cables may be included in a conduit, extending in parallel with the other pipes of the conduit to carry fluids, power and data signals between the towheads. Longitudinally-distributed transverse spacers may hold the various pipes and other elongate elements of the bundle relative to each other

Foundations, fixings or anchors such as staples or pins may be spaced along a conduit to support the conduit, to fix the conduit to the seabed and to prevent the conduit sinking excessively into the seabed.

Multiple pumping stations and/or heating units may be distributed along the length of the conduit, like repeater stations on a data transmission line, to maintain the pressure and temperature of the working fluid.

The conduit is apt to be towed out to an installation site in multiple sections that are each a few kilometres in length. In this respect, the maximum length of each section may be constrained by the availability of land at onshore fabrication facilities such as spoolbases or yards. However, a conduit can be made as long as required by fabricating it from multiple sections coupled end-to-end.

A towable conduit section can be prefabricated, assembled and tested onshore or in sheltered water before it is towed offshore for installation. Sections can be joined underwater or at the surface. Conveniently, multiple sections can be joined inshore at the surface, towed together to an installation site as a single unit and installed on the seabed simultaneously in one operation.

Various towing methods may be used to transport conduit sections to an offshore installation site. In particular, the sections may be towed at various depths in the water. Sections may be surface-towed at or near to the surface, or near the seabed to protect them from the influence of surface water dynamics. Mid-water towing may be preferred, for example using the controlled-depth towing method or CDTM as known in the art for installing pipeline bundles.

Stacking major components of the turbo-generator assembly along the vertical central axis simplifies installation and maintenance, allowing the assembly as a whole, or any of its major components, to be lowered from or raised to the surface together or separately. Subsea-releasable, ROV-operable fastenings may be provided between the stacked components for this purpose so that the assembly may be assembled or disassembled subsea.

The or each supply duct could be provided with one or more valves that are capable of controlling or blocking fluid flow. For example, one-way valves may allow water to enter the housing of the turbo-generator assembly but block the egress of gas from the housing.

A Pelton turbine is preferred for its compactness and efficiency. However, in principle, the turbine could be different type of turbine such as a Francis turbine. It may also be possible to replace the turbine with a different machine to drive the generator, such as a screw expander or other positive-displacement machine.

## Claims

1. A subsea long-distance power-transmission system (10, 34), comprising:
an electrically-driven pumping station (24) arranged to produce a flow of pressurised working fluid (42);
an electricity generating station (26) having an electrical generator (48) coupled to a fluid-powered machine (44), the generating station (26) being situated underwater;
a supply duct (28, 56) extending across the seabed (16) between the pumping station (24) and the generating station (26), that duct (56) being arranged to convey the flow of working fluid (42) from the pumping station (24) to power the machine (44); and
a subsea installation (14) connected to the generating station (26) to be powered electrically by energy conveyed along the supply duct (28, 56) by the flow of working fluid (42);
wherein the system (10, 34) is arranged as:
a closed loop, and further comprises a return duct (64) extending across the seabed (16) between the generating station (26) and the pumping station (24), that duct (64) being arranged to convey the flow of working fluid from the generating station (26) to the pumping station (24) for re-pressurisation; or
an open loop, wherein the working fluid (42) is seawater, the pumping station (24) comprises a seawater inlet (70) in fluid communication with one end of the supply duct (28, 56) and the generating station (26) comprises a seawater outlet (68) in fluid communication with an opposite end of the supply duct (28, 56) to expel seawater into the surrounding sea after using the seawater to power the machine (44).

2. The system (10, 34) of Claim 1, further comprising a remote electric power source (12) that is connected to the pumping station (24) by a cable (30).

3. The system (10, 34) of Claim 2, wherein the electric power source (12) is at an above-surface location (18).

4. The system (10, 34) of any preceding claim, wherein the working fluid (42) is fresh water or monoethylene glycol if the system (10, 34) is arranged as a closed loop.

5. The system (10, 34) of any preceding claim, further comprising a production flowline (72) that extends along the supply duct (28, 56) and is in fluid communication with a subsea source of hydrocarbon production fluid.

6. The system (10, 34) of Claim 5, wherein the production flowline (72) is disposed within the supply duct (28, 56).

7. The system (10, 34) of Claim 5 or Claim 6, further comprising a heater (74) acting on the working fluid in the supply duct (28, 56).

8. The system (10, 34) of any of Claims 5 to 7, wherein the production fluid flows in the production flowline (72) in contra-flow to the working fluid (42) flowing in the supply duct (28, 56).

9. The system (10, 34) of any preceding claim, wherein the supply duct (28, 56) comprises a penstock (60) that has an accelerator portion tapering toward the generating station (26).

10. The system (10, 34) of any preceding claim, wherein the pumping station (24) is situated underwater.

11. The system (10, 34) of any preceding claim, wherein the generating station (26) comprises at least one turbo-generator assembly having:
a hollow housing (36) that is arranged to maintain a gas-filled space (54) within the housing (36);
at least one working fluid inlet extending through the housing (36) to effect fluid communication between the supply duct (28) and the gas-filled space (54); and
a Pelton turbine (44) supported within the housing (36) to turn in the gas-filled space (54) in reaction to the flow of the working fluid (42) entering the gas-filled space (54) via the or each working fluid inlet.

12. The system (10, 34) of Claim 11, wherein the generator (48) is supported by the housing (36).

13. The system (10, 34) of Claim 11 or Claim 12, wherein the housing (36) further comprises a chamber (52) for receiving the working fluid after the working fluid has impinged on the turbine (44).

14. The system (10, 34) of any of Claims 11 to 13, further comprising at least one working fluid outlet (62) extending through the housing (36) in fluid communication with the pumping station (24).

15. The system (10, 34) of any of Claims 11 to 14, further comprising at least one working fluid outlet extending through the housing in fluid communication with surrounding seawater (68).

16. The system (10, 34) of any preceding claim, wherein the pumping station (24) and the generating station (26) are separated by a distance of at least 100km.

17. A method of transmitting power over a long distance underwater, the method comprising:
supplying electric power from an electric power source (12) to an electrically-driven pumping station (24);
using the electric power in the pumping station (24) to produce a flow of pressurised working fluid (42);
conveying the flow of working fluid (42) across the seabed (16) from the pumping station (24) to a machine (44) that is situated underwater and is remote from the pumping station (24);
using the working fluid (42) to power the machine (44);
generating electric power in a generator (48) driven by the machine (44); and
supplying the electric power from the generator (48) to an electric power consumer (14) situated underwater;
wherein the method further comprises:
returning the flow of working fluid (42) across the seabed (16) from the machine (44) to the pumping station (24), re-pressurising the flow and recirculating the flow back across the seabed (16) to the machine (44) in a closed loop; or
drawing seawater into the pumping station (24) from the surrounding sea to constitute the flow of working fluid (42) and expelling the seawater into the surrounding sea after using the seawater to power the machine (44).

18. The method of Claim 17, wherein the electric power source (12) is at an above-surface location (18).

19. The method of Claim 17 or Claim 18, wherein the pumping station (24) is situated underwater.

20. The method of any of Claims 17 to 19, comprising conveying a flow of hydrocarbon production fluid parallel to the flow of working fluid (42) between the pumping station (24) and the machine (44).

21. The method of Claim 20, comprising surrounding the flow of production fluid with the flow of working fluid (42).

22. The method of Claim 20 or Claim 21, comprising heating the flow of working fluid (42).

23. The method of any of Claims 20 to 22, wherein the flow of production fluid is opposed in direction to the flow of working fluid (42).

## Patentansprüche

1. Unterwasser-Langstrecken-Stromübertragungssystem (10, 34), umfassend:
eine elektrisch angetriebene Pumpstation (24), die angeordnet ist, um einen Fluss von unter Druck stehendem Arbeitsfluid (42) zu produzieren;
ein Elektrizitätskraftwerk (26), das einen elektrischen Generator (48) aufweist, der mit einer fluidgespeisten Maschine (44) gekoppelt ist, wobei das Kraftwerk (26) unter Wasser gelegen ist;
einen Versorgungskanal (28, 56), der sich über den Meeresboden (16) hinweg zwischen der Pumpstation (24) und dem Kraftwerk (26) erstreckt, wobei dieser Kanal (56) angeordnet ist, um den Fluss von Arbeitsfluid (42) von der Pumpstation (24), um die Maschine (44) zu speisen, zu leiten; und
eine Unterwasserinstallation (14), die mit dem Kraftwerk (26) verbunden ist, um mittels Energie elektrisch gespeist zu werden, die entlang des Versorgungskanals (28, 56) mittels des Flusses von Arbeitsfluid (42) geleitet wird;
wobei das System (10, 34) angeordnet ist als:
ein geschlossener Kreislauf, und ferner einen Rücklaufkanal (64) umfasst, der sich über den Meeresboden (16) hinweg zwischen dem Kraftwerk (26) und der Pumpstation (24) erstreckt, wobei dieser Kanal (64) angeordnet ist, um den Fluss von Arbeitsfluid von dem Kraftwerk (26) zu der Pumpstation (24) für eine erneute Unterdrucksetzung zu leiten; oder
ein offener Kreislauf, wobei das Arbeitsfluid (42) Meerwasser ist, die Pumpstation (24) einen Meerwassereinlass (70) in Fluidkommunikation mit einem Ende des Versorgungskanals (28, 56) umfasst, und das Kraftwerk (26) einen Meerwasserauslass (68) in Fluidkommunikation mit einem gegenüberliegenden Ende des Versorgungskanals (28, 56) umfasst, um Meerwasser in das umgebende Meer auszustoßen, nachdem das Meerwasser verwendet wurde, um die Maschine (44) zu speisen.

2. System (10, 34) nach Anspruch 1, ferner umfassend eine entfernte elektrische Stromquelle (12), die mit der Pumpstation (24) mittels eines Kabels (30) verbunden ist.

3. System (10, 34) nach Anspruch 2, wobei die elektrische Stromquelle (12) an einem Ort (18) über der Oberfläche liegt.

4. System (10, 34) nach einem der vorhergehenden Ansprüche, wobei das Arbeitsfluid (42) Frischwasser oder Monoethylenglykol ist, falls das System (10, 34) als geschlossener Kreislauf angeordnet ist.

5. System (10, 34) nach einem der vorhergehenden Ansprüche, ferner umfassend eine Produktionsflussleitung (72), die sich entlang des Versorgungskanals (28, 56) erstreckt und in Fluidkommunikation mit einer Unterwasserquelle von Kohlenwasserstoffproduktionsfluid ist.

6. System (10, 34) nach Anspruch 5, wobei die Produktionsflussleitung (72) innerhalb des Versorgungskanals (28, 56) eingerichtet ist.

7. System (10, 34) nach Anspruch 5 oder 6, ferner umfassend eine Heizung (74), die auf das Arbeitsfluid in dem Versorgungskanal (28, 56) wirkt.

8. System (10, 34) nach einem der Ansprüche 5 bis 7, wobei das Produktionsfluid in der Produktionsflussleitung (72) in einem Gegenfluss zu dem Arbeitsfluid (42) fließt, das in dem Versorgungskanal (28, 56) fließt.

9. System (10, 34) nach einem der vorhergehenden Ansprüche, wobei der Versorgungskanal (28, 56) eine Druckleitung (60) umfasst, die einen Beschleunigungsabschnitt aufweist, der sich zu dem Kraftwerk (26) hin verjüngt.

10. System (10, 34) nach einem der vorhergehenden Ansprüche, wobei die Pumpstation (24) unter Wasser gelegen ist.

11. System (10, 34) nach einem der vorhergehenden Ansprüche, wobei das Kraftwerk (26) mindestens eine Turbogeneratoranordnung umfasst, die Folgendes aufweist:
ein hohles Gehäuse (36), das angeordnet ist, um einen gasgefüllten Raum (54) innerhalb des Gehäuses (36) aufrechtzuerhalten;
mindestens einen Arbeitsfluideinlass, der sich durch das Gehäuse (36) erstreckt, um eine Fluidkommunikation zwischen dem Versorgungskanal (28) und dem gasgefüllten Raum (54) zu bewirken; und
eine innerhalb des Gehäuses (36) gelagerte Peltonturbine (44), um sich in dem gasgefüllten Raum (54) als Reaktion auf den Fluss des Arbeitsfluids (42) zu drehen, das in den gasgefüllten Raum (54) über den oder jeden Arbeitsfluideinlass eintritt.

12. System (10, 34) nach Anspruch 11, wobei der Generator (48) mittels des Gehäuses (36) gelagert wird.

13. System (10, 34) nach Anspruch 11 oder 12, wobei das Gehäuse (36) ferner eine Kammer (52) zum Aufnehmen des Arbeitsfluids umfasst, nachdem das Arbeitsfluid auf die Turbine (44) aufgetroffen ist.

14. System (10, 34) nach einem der Ansprüche 11 bis 13, ferner umfassend mindestens einen Arbeitsfluidauslass (62), der sich durch das Gehäuse (36), in Fluidkommunikation mit der Pumpstation (24), erstreckt.

15. System (10, 34) nach einem der Ansprüche 11 bis 14, ferner umfassend mindestens einen Arbeitsfluidauslass, der sich durch das Gehäuse, in Fluidkommunikation mit umgebendem Meerwasser (68), erstreckt.

16. System (10, 34) nach einem der vorhergehenden Ansprüche, wobei die Pumpstation (24) und das Kraftwerk (26) mittels einer Strecke von mindestens 100 km getrennt sind.

17. Verfahren zum Übertragen von Strom über eine lange Strecke unter Wasser, wobei das Verfahren umfasst:
Versorgen mit elektrischem Strom von einer elektrischen Stromquelle (12) an eine elektrisch angetriebenen Pumpstation (24);
Verwenden des elektrischen Stroms in der Pumpstation (24), um einen Fluss von unter Druck stehendem Arbeitsfluid (42) zu produzieren;
Leiten des Flusses von Arbeitsfluid (42) über den Meeresboden (16) hinweg von der Pumpstation (24) zu einer Maschine (44), die unter Wasser gelegen und von der Pumpstation (24) entfernt ist;
Verwenden des Arbeitsfluids (42), um die Maschine (44) zu speisen;
Erzeugen von elektrischem Strom in einem Generator (48), der mittels der Maschine (44) angetrieben wird; und
Versorgen mit elektrischem Strom aus dem Generator (48) an einen unter Wasser gelegenen elektrischen Stromverbraucher (14);
wobei das Verfahren ferner umfasst:
Zurückführen des Flusses von Arbeitsfluid (42) über den Meeresboden (16) hinweg von der Maschine (44) zu der Pumpstation (24), erneutes Unterdrucksetzen des Flusses und Rezirkulieren des Flusses zurück über den Meeresboden (16) hinweg zu der Maschine (44) in einem geschlossenen Kreislauf; oder
Einziehen von Meerwasser in die Pumpstation (24) aus dem umgebenden Meer, um den Fluss von Arbeitsfluid (42) zu bilden, und Ausstoßen des Meerwassers in das umgebende Meer, nach dem Verwenden des Meerwassers, um die Maschine (44) zu speisen.

18. Verfahren nach Anspruch 17, wobei die elektrische Stromquelle (12) an einem Ort (18) über der Oberfläche liegt.

19. Verfahren nach Anspruch 17 oder 18, wobei die Pumpstation (24) unter Wasser gelegen ist.

20. Verfahren nach einem der Ansprüche 17 bis 19, umfassend das Leiten eines Flusses von Kohlenwasserstoffproduktionsfluid parallel zu dem Fluss von Arbeitsfluid (42) zwischen der Pumpstation (24) und der Maschine (44).

21. Verfahren nach Anspruch 20, umfassend ein Umgeben des Flusses von Produktionsfluid mit dem Fluss von Arbeitsfluid (42).

22. Verfahren nach Anspruch 20 oder 21, umfassend ein Erwärmen des Flusses von Arbeitsfluid (42).

23. Verfahren nach einem der Ansprüche 20 bis 22, wobei der Fluss von Produktionsfluid dem Fluss von Arbeitsfluid (42) in der Richtung entgegengesetzt ist.

## Revendications

1. Système sous-marin de transport d'énergie à longue distance (10, 34), comprenant :
une station de pompage entraînée électriquement (24) conçue pour produire un flux de fluide actif sous pression (42) ;
une station de production d'électricité (26) dotée d'un générateur électrique (48) couplé à une machine alimentée par fluide (44), la station de production (26) étant située sous l'eau ;
un conduit d'alimentation (28, 56) s'étendant à travers le fond marin (16) entre la station de pompage (24) et la station de production (26), ce conduit (56) étant conçu pour transporter le flux de fluide actif (42) depuis la station de pompage (24) pour alimenter la machine (44) ; et
une installation sous-marine (14) reliée à la station de production (26) pour être alimentée électriquement par l'énergie transportée le long du conduit d'alimentation (28, 56) par le flux de fluide actif (42) ;
dans lequel le système (10, 34) est conçu :
en boucle fermée, et comprend en outre un conduit de retour (64) s'étendant à travers le fond marin (16) entre la station de production (26) et la station de pompage (24), ce conduit (64) étant conçu pour transporter le flux de fluide actif depuis la station de production (26) à la station de pompage (24) pour une remise sous pression ; ou
en boucle ouverte, dans laquelle le fluide actif (42) est de l'eau de mer, la station de pompage (24) comprend une entrée d'eau de mer (70) en communication fluidique avec une extrémité du conduit d'alimentation (28, 56) et la station de production (26) comprend une sortie d'eau de mer (68) en communication fluidique avec une extrémité opposée du conduit d'alimentation (28, 56) pour expulser l'eau de mer dans la mer environnante après avoir utilisé l'eau de mer pour alimenter la machine (44).

2. Système (10, 34) selon la revendication 1, comprenant en outre une source d'énergie électrique à distance (12) qui est reliée à la station de pompage (24) par un câble (30).

3. Système (10, 34) selon la revendication 2, dans lequel la source d'énergie électrique (12) est à un emplacement au-dessus de la surface (18).

4. Système (10, 34) selon l'une quelconque des revendications précédentes, dans lequel le fluide actif (42) est de l'eau douce ou du monoéthylène glycol si le système (10, 34) est conçu en boucle fermée.

5. Système (10, 34) selon l'une quelconque des revendications précédentes, comprenant en outre une conduite d'écoulement de production (72) qui s'étend le long du conduit d'alimentation (28, 56) et qui est en communication fluidique avec une source sous-marine de fluide de production d'hydrocarbures.

6. Système (10, 34) selon la revendication 5, dans lequel la conduite d'écoulement de production (72) est disposée à l'intérieur du conduit d'alimentation (28, 56).

7. Système (10, 34) selon la revendication 5 ou la revendication 6, comprenant en outre un élément chauffant (74) agissant sur le fluide actif dans le conduit d'alimentation (28, 56).

8. Système (10, 34) selon l'une quelconque des revendications 5 à 7, dans lequel le fluide de production s'écoule dans la conduite d'écoulement de production (72) à contre-courant du fluide actif (42) s'écoulant dans le conduit d'alimentation (28, 56).

9. Système (10, 34) selon l'une quelconque des revendications précédentes, dans lequel le conduit d'alimentation (28, 56) comprend une conduite forcée (60) qui a une partie d'accélérateur se rétrécissant vers la station de production (26).

10. Système (10, 34) selon l'une quelconque des revendications précédentes, dans lequel la station de pompage (24) est située sous l'eau.

11. Système (10, 34) selon l'une quelconque des revendications précédentes, dans lequel la station de production (26) comprend au moins un ensemble turbogénérateur ayant :
un boîtier creux (36) qui est conçu pour maintenir un espace rempli de gaz (54) à l'intérieur du boîtier (36) ;
au moins une entrée de fluide actif s'étendant à travers le boîtier (36) pour effectuer une communication fluidique entre le conduit d'alimentation (28) et l'espace rempli de gaz (54) ; et
une turbine Pelton (44) supportée à l'intérieur du boîtier (36) pour tourner dans l'espace rempli de gaz (54) en réaction à l'écoulement du fluide actif (42) entrant dans l'espace rempli de gaz (54) par l'intermédiaire de la ou de chaque entrée de fluide actif.

12. Système (10, 34) selon la revendication 11, dans lequel le générateur (48) est supporté par le boîtier (36).

13. Système (10, 34) selon la revendication 11 ou la revendication 12, dans lequel le boîtier (36) comprend en outre une chambre (52) pour recevoir le fluide actif après que le fluide actif a heurté la turbine (44).

14. Système (10, 34) selon l'une quelconque des revendications 11 à 13, comprenant en outre au moins une sortie de fluide actif (62) s'étendant à travers le boîtier (36) en communication fluidique avec la station de pompage (24).

15. Système (10, 34) selon l'une quelconque des revendications 11 à 14, comprenant en outre au moins une sortie de fluide actif s'étendant à travers le boîtier en communication fluidique avec l'eau de mer environnante (68).

16. Système (10, 34) selon l'une quelconque des revendications précédentes, dans lequel la station de pompage (24) et la station de production (26) sont séparées par une distance d'au moins 100 km.

17. Procédé de transmission d'énergie sur une longue distance sous l'eau, le procédé comprenant :
la fourniture de l'énergie électrique à partir d'une source d'énergie électrique (12) à une station de pompage entraînée électriquement (24) ;
l'utilisation de l'énergie électrique dans la station de pompage (24) pour produire un flux de fluide actif sous pression (42) ;
l'acheminement du flux de fluide actif (42) à travers le fond marin (16) depuis la station de pompage (24) jusqu'à une machine (44) située sous l'eau et éloignée de la station de pompage (24) ;
l'utilisation du fluide actif (42) pour alimenter la machine (44) ;
la génération d'énergie électrique dans un générateur (48) entraîné par la machine (44) ; et
la fourniture d'énergie électrique du générateur (48) à un consommateur d'énergie électrique (14) situé sous l'eau ;
le procédé comprenant en outre :
le renvoi du flux de fluide actif (42) à travers le fond marin (16) depuis la machine (44) jusqu'à la station de pompage (24), la remise sous pression du flux et la recirculation du flux à travers le fond marin (16) vers la machine (44) en boucle fermée ; ou
l'aspiration de l'eau de mer dans la station de pompage (24) depuis la mer environnante pour constituer le flux de fluide actif (42) et l'expulsion de l'eau de mer dans la mer environnante après avoir utilisé l'eau de mer pour alimenter la machine (44).

18. Procédé selon la revendication 17, dans lequel la source d'énergie électrique (12) est à un emplacement au-dessus de la surface (18).

19. Procédé selon la revendication 17 ou la revendication 18, dans lequel la station de pompage (24) est située sous l'eau.

20. Procédé selon l'une quelconque des revendications 17 à 19, comprenant le transport d'un flux de fluide de production d'hydrocarbures parallèlement au flux de fluide actif (42) entre la station de pompage (24) et la machine (44).

21. Procédé selon la revendication 20, comprenant le fait d'entourer le flux de fluide de production avec le flux de fluide actif (42).

22. Procédé selon la revendication 20 ou la revendication 21, comprenant le chauffage du flux de fluide actif (42).

23. Procédé selon l'une quelconque des revendications 20 à 22, dans lequel le flux de fluide de production est opposé en terme de direction au flux de fluide actif (42).
